**Europäisches Patentamt**

**European Patent Office**

**Office européen des brevets**

(11) Veröffentlichungsnummer: **0 428 934 A2**

## (12) EUROPÄISCHE PATENTANMELDUNG

(21) Anmeldenummer: **90121202.7**

(22) Anmeldetag: **06.11.90**

(51) Int. Cl.5: **G06F 11/16**

(30) Priorität: **20.11.89 DE 3938501**

(43) Veröffentlichungstag der Anmeldung:
**29.05.91 Patentblatt 91/22**

(84) Benannte Vertragsstaaten:
**AT BE CH DE DK ES FR GB IT LI NL**

(71) Anmelder: **Siemens Aktiengesellschaft**
**Wittelsbacherplatz 2**
**W-8000 München 2(DE)**

(72) Erfinder: **Scharfenberg, Georg, Prof.**
**Schernrieder Strasse 26**
**W-8411 Laaber(DE)**

(54) **Verfahren zum Betrieb eines mehrkanaligen failsafe-Rechnersystems und Einrichtung zur Durhführung des Verfahrens.**

(57) Allen Einrichtungen (SPSA, IOSA) des Rechnersystems (MC1, MC2) für sicherheitsempfindliche Funktionen (operative Funktionen) sind individuell ansteuerbare Torschaltungen (TOR) zugeordnet, die in eingestelltem Zustand durch Sperren des Zugriffs auf diese Einrichtungen ein Verändern des Datenbestandes dieser Einrichtungen verhindern. Die Torschaltungen werden über eine Baugruppe (BESU) immer dann eingestellt wenn nicht sicherheitsrelevante Programme laufen. Diese nicht sicherheitsrelevanten Programme können ausschließlich auf solche Einrichtungen (SPAA, IOAA) zugreifen und deren Datenbestand verändern, die nicht sicherheitsempfindlichen Funktionen (dispositive Funktionen) zugeordnet sind. Da die nicht sicherheitsrelevanten Programme keinen verändern den Zugriff auf die Einrichtungen für sicherheitsempfindliche Funktionen haben, können sie sich selbst bei Programmfehlern nicht gefährdend auf den Prozeß auswirken; diese Programme brauchen deshalb keiner Richtigkeitskontrolle unterworfen werden. Es gibt eine Einrichtung (AWU) zur Überwachung und Funktionskontrolle der Torschaltungen sowie eine Einrichtung (TIM), die bewirkt, daß nach einer vorgegebenen maximalen Laufzeit eines Programms ohne Sicherheitsverantwortung zwangsweise das Betriebssystem des Rechnersystems aufgerufen wird. Die Hardware (BESU, TOR, TIM, AWU) zur Durchführung des Verfahrens ist einer laufenden Funktionskontrolle und zyklischen Funktionsprüfung unterzogen; etwaige Fehlreaktionen sind über die sich ständig vergleichenden Rechnerkanäle erkennbar.

EP 0 428 934 A2

# VERFAHREN ZUM BETRIEB EINES MEHRKANALIGEN FAILSAFE-RECHNERSYSTEMS UND EINRICHTUNG ZUR DURCHFÜHRUNG DES VERFAHRENS

Die Erfindung bezieht sich auf ein Verfahren nach dem Oberbegriff des Patentanspruches 1.

Ein derartiges Verfahren ist aus der DE-Zeitschrift "Elektronische Rechenanlagen" 22 (1980), Heft 5, Seiten 229 - 236 bekannt. Dort wird über das sichere Mikrocomputersystem SIMIS berichtet, das zur Steuerung in der Eisenbahnsignaltechnik verwendet wird. Bei dem SIMIS handelt es sich um ein Rechnersystem mit zwei Einzelrechnern zur gleichzeitigen unabhängigen Bearbeitung anliegender Aufgaben unter Verwendung identischer Hard- und Software. Die auf den internen Bussen der beiden Rechner liegenden Daten werden ständig über zwei unabhängige Vergleicher miteinander verglichen und im Fall einer erkannten Datenabweichung wird jede weitere Wirkung des SIMIS auf seine Peripherie, z. B. das Aussenden von Datentelegrammen an andere Geräte oder Funktionseinheiten, unterbunden. Alle Stellstromkreise werden dann sofort und sicher stromlos geschaltet. Diesem Schaltzustand ist in Eisenbahnsignalanlagen grundsätzlich eine betriebshemmende und damit im Sinne der Bahn weniger gefährliche Wirkung zugeordnet. Durch die im Störungsfall herbeigeführte Abtrennung der Peripherie von dem steuernden Rechner soll das Aussenden fehlerhafter Stellbefehle entweder rechtzeitig ganz unterbunden oder wenigstens auf so kurze Zeiten begrenzt werden, daß eine gefährdend wirkende Fehlansteuerung der Stellglieder verhindert wird. Um ein derartiges Schaltverhalten zu erreichen, müssen bestimmte Maßnahmen gegen Fehler im Hardware- und Softwarebereich getroffen werden. So sind bisher alle Programme, die in einem signaltechnisch sicheren Rechnersystem installiert werden, einer Richtigkeitskontrolle zu unterziehen und zwar unabhängig davon, ob diese Programme Sicherheitsverantwortung tragen oder allgemeine, nicht sicherheitsrelevante Funktionen realisieren. Programme mit Sicherheitsverantwortung sind solche, von denen Gefahren für Mensch und Material ausgehen können. Hierzu zählen alle operativen Programme, die bei der Steuerung eines Stellwerkes angewendet werden, also alle Programme zum Stellen und Sichern von Fahrwegen. Zu den Programmen ohne Sicherheitsverantwortung zählen vor allem die Dispositionsprogramme. Alle Maßnahmen, die z. B. von der Zugnummer oder vom Fahrplan her abgeleitet werden, sind nicht sicherheitsrelevant. Wenn ein Rechner z. B. eine falsche fahrplanmäßige Abfahrtszeit vorgeben oder berücksichtigen würde, so wäre das zwar betrieblich störend aber weder für Mensch noch Material gefährlich.

Auch Programme ohne Sicherheitsverantwortung müssen bisher wie Programme mit Sicherheitsverantwortung auf Richtigkeit geprüft werden, weil die Möglichkeit besteht, daß sie in unzulässiger Weise entweder auf die Stellwerkshardware einwirken könnten oder aber auch die sicherheitsrelevanten Programme beispielsweise durch Verfälschung von Daten beeinflussen könnten (ORE Frage A155.2, Bericht RP7 "Systementwurf für sichere Rechnersysteme", S. 9 vom April 1986). Beide Arten von Programmen laufen in den Rechnern des elektronischen Stellwerkes gemeinsam ab. Sie lassen sich klassifizieren beispielsweise durch ihre Adressenzuordnung oder die Beiordnung von Klassifizierungskennzeichen, z. B. den Namen der betreffenden Programme.

Es gibt bis heute noch keine Mittel, mit denen sich die Richtigkeit von Programmen direkt nachweisen ließe. Es gibt lediglich Möglichkeiten, die Programme nach gewissen Gesetzmäßigkeiten aufzubauen und zu dokumentieren, die Programme mehrfach unabhängig voneinander zu kontrollieren, im Testbetrieb laufen zu lassen und im praktischen Betrieb zu erproben. Der finanzielle und zeitliche Aufwand für diese Richtigkeitskontrollen ist außerordentlich groß. Es wäre daher aus Gründen des Aufwandes wünschenswert, wenn nur noch Programme mit Sicherheitsverantwortung aber nicht mehr solche ohne Sicherheitsverantwortung einer Richtigkeitskontrolle zu unterziehen wären. Aufgabe der Erfindung ist es, ein Verfahren zum Betrieb eines mehrkanaligen failsafe-Rechnersystems nach dem Oberbegriff des Patentanspruches 1 anzugeben, bei dem die nicht sicherheitsrelevanten Programme keinem Sicherheitsnachweis mehr unterzogen werden brauchen. Ferner ist es Aufgabe der Erfindung, eine Einrichtung zur Durchführung dieses Verfahrens anzugeben.

Die Erfindung löst diese Aufgabe durch die kennzeichnenden Merkmale des Patentanspruches 1 bzw. des Patentanspruches 3. Dabei wird durch den gemäß Anspruch 1 vorgesehenen Schutz aller sicherheitsempfindlichen Einriohtungen gegen verändernde Zugriffe während der Behandlung nicht sicherheitsrelevanter Programme das Einwirken dieser nicht sicherheitsrelevanten Programme auf die Hard- und Software des failsafe-Rechnersystems sicher unterbunden.

Anspruch 2 benennt die Maßnahmen, die sicherstellen, daß auf jeden Fall aus einer Behandlungsphase für nicht sicherheitsrelevante Programme zwangsweise wieder in die Behandlung sicherheitsrelevanter Programme zurückgekehrt wird.

Die Einrichtung gemäß Anspruch 3 benennt die Hardware zum Abtrennen bestimmter Rechnerbausteine vom Prozessor während der Abarbeitung nicht sicherheitsrelevanter Programme. Dabei erfolgt die Abtrennung ausschließlich in Schreib-, nicht jedoch auch in Leserichtung. Hierdurch werden verändernde Zugriffe, d. h. Eingaben in die betreffenden sicherheitsempfindlichen Einrichtungen verhindert, nicht jedoch das Lesen dort gespeicherter Daten.

In vorteilhafter Weise sind nach der Lehre des Anspruches 4 zum Speichern und Ausgeben von sicherheitsempfindlichen und nicht sicherheitsempfindlichen Daten gesonderte Speicher und Ausgabebaugruppen vorgesehen. Dies führt in Verbindung mit den vorgenannten Torschaltungen gemäß Anspruch 3 zu einem außerordentlich übersichtlichen und einfachen Aufbau eines nach der erfindungsgemäßen Lehre betriebenen Mehrrechnersystems.

Im Anspruch 5 sind die Hardwaremaßnahmen zur Realisierung der gemäß Anspruch 2 vorgesehenen zwangsweisen Rückkehr in die Bearbeitung von Programmen mit Sicherheitsverantwortung angegeben.

Zur Überwachung des Betriebsverhaltens der Torschaltungen ist gemäß Anspruch 6 eine Auswahlsignalschaltung vorgesehen, die die Betriebszustandsmeldungen der Torschaltungen an eine bewertende CPU weitergibt.

Die Steuerung der Torschaltungen erfolgt gemäß Anspruch 7 unter Verwendung einer Kippstufe, die beim Abarbeiten nicht sicherheitsrelevanter Programme in die eine und beim Abarbeiten sicherheitsrelevanter Programme in die andere Schaltstellung zu steuern ist. Die Steuersignale für die Kippstufe sind dabei in vorteilhafter Weise abhängig gemacht außer vom Vorhandensein entsprechender Adreßsignale vom gleichzeitigen Vorhandensein von Steuersignalen der CPU. Hierdurch wird sichergestellt, daß das Einstellen und insbesondere das Aufschließen der Tore nicht durch irgendwelche zufällig auf dem Adreßbus liegende Daten bewirkt wird. Das Aufschließen der Tore und damit die Zugänglichkeit der sicherheitsempfindlichen Einrichtungen wird davon abhängig gemacht, daß die CPU eine Programmbearbeitung auf der Adresse des Betriebssystems durchführt,also ein auf Richtigkeit geprüftes Programm abarbeitet. Eine Hardwareeinrichtung analysiert hierzu die auf dem Adreßbus liegenden Adressensignale und erkennt aus dem Anliegen des Adressensignales den Ablauf des Betriebssystems. Folgt später ein Programm ohne Sicherheitsverantwortung, so veranlaßt die Hardware die Ausgabe eines Steuersignales, über das die Tore eingestellt werden; damit ist der verändernde Zugriff des nicht sicherheitsrelevanten Programmes auf die sicherheitsempfindlichen Einrichtungen unterbunden.

Im Anspruch 8 sind die Ausbildung und Steuerung der nach der Erfindung vorgesehenen Torschaltungen im einzelnen angegeben.

Das am Ausgang der Torschaltungen anliegende, einer bestimmten sicherheitsempfindlichen Einrichtung zugeordnete Baugruppensignal wird nach der Lehre des Anspruches 9 als Zustandsüberwachungssignal der Auswahlsignalschaltung zugeführt und erlaubt so die Überwachung des Betriebszustandes der Torschaltungen.

Zur Steuerung der die Tore schaltenden Kippstufe und zur Selektion der einzelnen Tore dienen nach der Lehre des Anspruches 10 Adreßkomparatoren, welche die Übereinstimmung zwischen einer auf dem Adreßbus anliegenden Adresse und einer eingeprägten Betriebs- oder Baugruppenadresse detektieren. Der Aufbau einer Einrichtung zur zwangsweisen Rückkehr in ein sicherheitsrelevantes Verarbeitungsprogramm ist im Anspruch 11 angegeben. Diese Einrichtung bewirkt nach Ablauf einer vorgegebenen wählbaren Zeitspanne den Ausstieg aus einem gerade ablaufenden nicht sicheren Programm.

Anspruch 12 benennt Maßnahmen zur Funktionskontrolle der Sperrwirkung der Tore; diese Tore werden zu Prüfzwecken eingestellt und dann wird der Versuch unternommen, Daten in den zugehörigen sicherheitsempfindlichen Einrichtungen zu verändern; etwaige Veränderungen im Datenbestand der Einrichtungen werden über die Vergleicher sicher erkannt. Überwacht wird das Funktionsverhalten der Tore durch die Auswahlsignalschaltung.

Zum Prüfen des nicht eingestellten Zustandes werden die Tore nach der Lehre des Anspruches 13 mit den am Ausgang der sicherheitsempfindlichen Einrichtungen anstehenden Daten beschrieben. Dabei wird am Datenbestand der sicherheitsempfindlichen Einrichtungen selbst nichts geändert; aus dem Ausgangssignal der Torschaltungen ist jedoch erkennbar, ob die Torschaltungen durchlässig sind oder nicht.

Die Tore selbst können nach der Lehre des Anspruches 14 in integrierter Technik ausgeführt sein, weil sie jederzeit von der CPU her auf ordnungsgerechtes Betriebsverhalten überwachbar sind.

Anspruch 15 benennt die Maßnahmen zur Funktionsprüfung des Zeitschalters, der die zwangsweise Rückkehr in ein Programm mit Sicherheitsverantwortung gewährleisten soll. Mit der Funktionsprüfung der Zeitschalter in beiden Rechnerkanälen wird sichergestellt, daß die Zeitschalter im Ernstfall auch tatsächlich so reagieren wie sie reagieren sollen.

Das Prüfen der Zeitschalter und der Tore zum frühzeitigen Erkennen von Fehlfunktionen muß nach der Lehre des Anspruches 16 innerhalb der jeweils zulässigen Offenbarungszeit für Einzelfehler erfolgen, weil sonst mit nicht sicher erkennbaren Doppelfehlern gerechnet werden muß, welche die Sicherheit des Rechnersystems unterlaufen.

Die Erfindung ist nachstehend anhand eines in der Zeichnung dargestellten Ausführungsbeispieles näher erläutert.

Die Zeichnung zeigt:

in Figur 1 eine Übersichtsdarstellung eines gemäß der Erfindung ausgebildeten zweikanaligen failsafe-Rechnersystems,

in Figur 2 die Ausbildung der Hardware zum Generieren von Steuersignaien, welche den verändernden Zugriff auf sicherheitsempfindliche Einrichtungen blockieren können,

in Figur 3 die Ausbildung der verwendeten Torschaltungen und

in Figur 4 den Aufbau einer Hardware zur zwangsweisen Rückkehr in ein Programm mit Sicherheitsverantwortung.

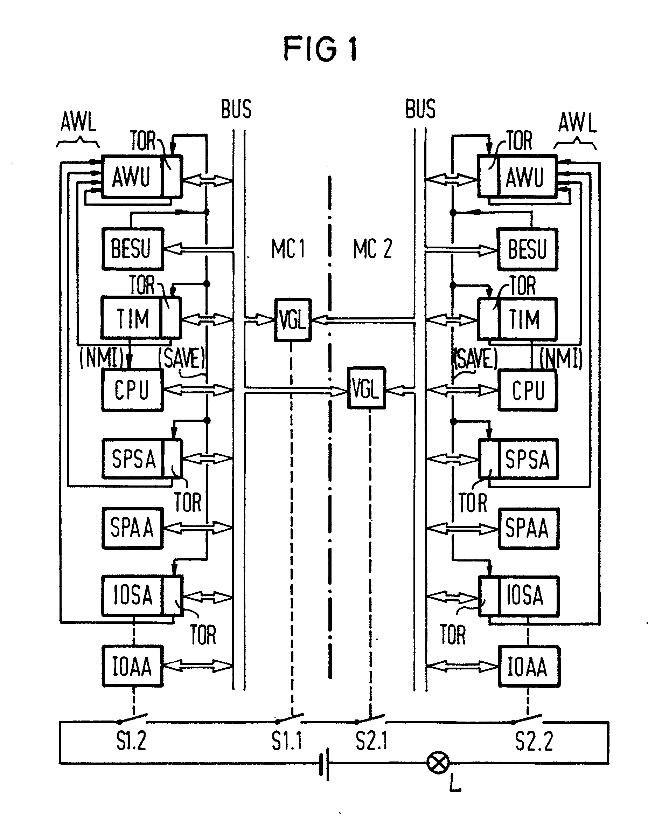

Figur 1 zeigt ein aus zwei baugleichen und mit der gleichen Software betriebenen Einzelrechnern MC1, MC2 bestehendes failsafe-Doppelrechnersystem. Für einander entsprechende Baugruppen und Einrichtungen der beiden Einzelrechner sind die gleichen Bezugszeichen verwendet worden; auch für einander entsprechende Baugruppen innerhalb der beiden Einzelrechner wurden die gleichen Bezeichnungen gewählt. Jeder Einzelrechner des Rechnersystems besteht aus einer durch das Betriebssystem des Rechners gesteuerten CPU, zugehörigen Speichern und zugehörigen Ein-/Ausgabe-Baugruppen. In der Zeichnung nicht dargestellt sind Festwertspeicher für die Vorgabe unveränderlicher Daten und die Bereitstellung der Betriebs- und Anwenderprogramme, weil diese Daten und Programme nur durch ganz bestimmte Prozeduren, nicht jedoch durch eine beliebige als fehlerhaft angenommene Software geändert werden können und damit für die nachfolgenden Sicherheitsbetrachtungen ohne Belang sind. Das in der Zeichnung dargestellte Rechnersystem dient zur Steuerung des Lampenstromkreises einer Signallampe L; hierbei soll es sich um die Signallampe eines Fahrtbegriffes handeln. Dieser Fahrtbegriff darf nur erscheinen, wenn beide Rechner unabhängig voneinander einen entsprechenden Stellbefehl erarbeitet haben und ausgeben und wenn die beiden unabhängigen Hardwarevergleicher VGL auf beiden rechnerinternen Bussen übereinstimmende Daten detektieren. Diese Abhängigkeit wird in der Zeichnung symbolisiert durch die Schaltkontakte S1.2, S1.1; S2.2, S2.1. Sobald einer der Rechner den Stellbefehl zurücknimmt oder mindestens einer der Vergleicher eine Ungleichheit detektiert, wird der Lampenstromkreis für den Fahrtbegriff aufgetrennt, wobei automatisch der in der Zeichnung nicht dargestellte Lampenkreis für den Haltbegriff geschlossen wird.

Jedem Rechner sind zwei voneinander unabhängige Speicher SPSA und SPAA zugeordnet. In den Speichern SPSA sind sicherheitsempfindliche Daten, also Daten für operative Aufgaben wie z.B. die Steuerung eines Stellwerks, in den Speichern SPAA Daten für allgemeine Aufgaben, also Daten für dispositive Aufgaben wie z.B. die zeitliche Einhaltung von Fahrplänen, gespeichert. Sicherheitsrelevante Programme sollen Zugriff zu beiden Speichern haben und dort ggf. auch Daten verändern können. Nicht sicherheitsrelevante Programme, für die keine Richtigkeitskontrolle durchgeführt wurde, sollen nur zu den letztgenannten Speichern Zugriff haben und diese dabei gegebenenfalls auch verändern können; diese Programme können zusätzlich auch in Leserichtung Zugriff haben zu den Speichern SPSA für sicherheitsempfindliche Aufgaben, ohne die dort gespeicherten Daten aber verändern zu können. Die Sicherung der gespeicherten Daten gegen Veränderung wird bewirkt durch später noch erläuterte Torschaltungen TOR, die beim Abarbeiten nicht sicherungstechnischer Programmteile eingestellt sind und den verändernden Zugriff, also den Schreibzugriff, auf die gespeicherten Daten verhindern. Die Kommunikation mit dem vom Rechnersystem zu steuernden Prozeß geschieht über Ein/Ausgabebaugruppen IOSA und IOAA. Dabei sind die Ausgabebaugruppen IOSA zur Realisierung sicherheitsempfindlicher Aufgaben vorgesehen, beispielsweise zur Steuerung von Signalen und Weichen, während die Ausgabebaugruppen IOAA zur Realisierung allgemeiner, also nicht sicherungstechnischer Aufgaben, z. B. der Steuerung von Zugzielanzeigern, verwendet sind. Auf diese nicht sicherheitsempfindlichen Einrichtungen der Peripherie soll jederzeit zugegriffen werden könne und zwar nicht nur in Leserichtung sondern auch in Schreibrichtung, d. h. es sollen jederzeit Kommandos beispielsweise zum Einstellen bestimmter Anzeigen im Zugzielanzeiger ausgegeben werden können. Auf die an die Ein-/Ausgabebaugruppen IOSA angeschlossenen sicherheitsempfindlichen Einrichtungen sollen nur während der Abarbeitung von der Richtigkeitskontrolle unterworfenen Programmen mit signaltechnischem Charakter verändernd zugegriffen werden können, d. h. nur diese Programme sollen an der Stellwerksperipherie etwas bewirken können. Zu den in den Speichern IOSA für sicherungsempfindliche Einrichtungen gepeicherten Daten haben jedoch auch die nicht sicherungstechnischen Programmteile Zugriff; diese können die dort gespeicherten Daten aber nur lesen und nicht verändern.

Die zusätzlich zu den vorgenannten Baugruppen in den einzelnen Rechnern vorhandenen Baugruppen BESU, AWU und TIM dienen der Realisierung der erfindungsgemäßen Lehre durch Generierung von Steuersignaien zur Steuerung der Torschaltungen, durch Funktionsüberwachung der Torschaltungen und durch zwangsweises Rücksetzen aus einem Programm ohne Sicherheitsverantwortung in ein Programm mit Sicherheitsverantwortung. Die Funktion und der Aufbau der zur Durchführung der erfindungsgemäßen Lehre vorgesehenen Baugruppen wird nachstehend näher erläutert.

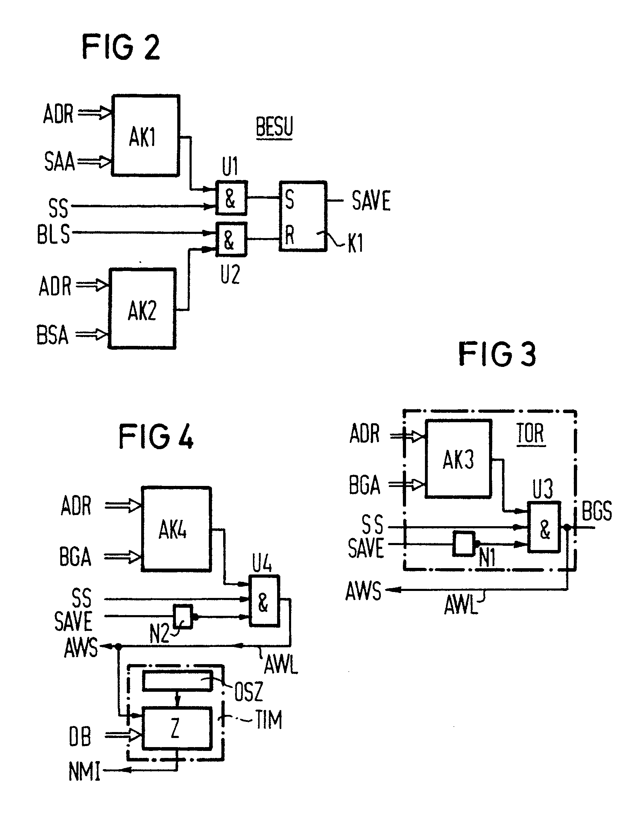

Die Baugruppe BESU = Betriebssystem-Start-Überwachung dient dazu, die den sicherheitsempfindlichen Einrichtungen zugeordneten Torschaltungen TOR während der Abarbeitung nicht sicherungstechnischer Programme vor veränderndem Zugriff zu schützen. Es sind dies neben den Torschaltungen für die Schreib-/Lesespeicher SPSA und die Rechnerperipherie IOSA auch Torschaltungen, die den später noch zu erläuternden Einrichtungen AWU (Auswahlsignal-Überwachung) und TIM (Zeitschalter) zugeordnet sind. Zur Verdeutlichung des Aufbaus der BESU = Betriebssystem-Start-Überwachung wird nachfolgend auf Fig. 2 der Zeichnung Bezug genommen.

Die BESU besteht aus zwei den beiden Schaltfunktionen "Einstellen = Sperren der Torschaltungen" und "Aufschließen Entsperren der Torschaltungen" zugeordneten Schaltungsteilen. Der Schaltungsteil, der während der Abarbeitung nicht sicherungstechnischer Programmteile die Torschaltungen einstellen soll, besteht aus einem Adreßkomparator AK1, einem UND-Glied U1 und einer Kippstufe K1. Der Adreßkomparator AK1 liest eingangsseitig ständig die am Adreßbus liegende Adresse ADR und vergleicht diese mit einer ihm eingeprägten Adresse SAA = SAVE-Signal-Auslöse-Adresse. Diese Adresse liegt immer dann am Adreßbus, wenn ein Programm oder Programmteil mit nicht sicherungstechnischem Charakter abzuarbeiten ist. Sie läßt sich z. B. aus dem Namen des betreffenden Programmes ableiten.

Beim Erkennen eines Programmes für nicht sicherheitsempfindliche Aufgaben stellt der Adreßkomparator AK1 an seinem Ausgang Steuerpotential für den einen Eingang ein UND-Gliedes U1 zur Verfügung, dessen anderer Eingang durch Steuersignale SS der steuernden CPU beaufschlagbar ist. Die Verknüpfung des Anforderungssignals SAA zum Einstellen des Tores mit einem Steuersignal der CPU stellt sicher, daß die besagte Anforderung nicht durch eine von einer beliebigen Software generierte Adresse, die zufälligerweise mit der SAVE-Signal-Auslöseadresse übereinstimmt, veranlaßt wird, sondern von der CPU her tatsächlich gewollt ist. Mit dem Durchschalten des UND-Gliedes U1 auf den Setzeingang S einer bistabilen Kippstufe K1 erscheint am Ausgang der Kippstufe ein Signal SAVE, über das die Torschaltungen TOR der sicherheitsempfindlichen Einrichtungen eingestellt werden. Für die Dauer dieses SAVE-Signals ist ein verändernder Zugriff auf die sicherheitsempfindlichen Einrichtungen nicht möglich. Zum Abschalten des SAVE- Signals nach Abarbeitung des Programms für nicht sicherheitsempfindliche Aufgaben wird die Kippstufe K1 über ihren Rücksetzeingang R zurückgesetzt. Das Rücksetzen erfolgt über einen Adreßkomparator AK2, der die auf dem Adreßbus liegende Adresse mit einer Betriebssystem-Startadresse BSA vergleicht. Diese Betriebssystem-Startadresse wird immer dann aufgerufen, wenn nach der Abarbeitung eines Programmes oder eines Programmteiles auf den Startadreßbereich des Betriebssystem zurückgesprungen wird. Die Betriebssystem-Startadresse BSA kann eine feste Adresse oder einen Adreßbereich umschließen. Beim Erkennen der Betriebssystem-Startadresse legt der Adreßkomparator AK2 Steuerpotential an den einen Eingang eines UND-Gliedes U2, dessen anderem Eingang von der CPU her Steuersignale, im vorliegenden Fall Befehlslesesignale BLS, zuführbar sind. Das Befehlslesesignal BLS ist ein Ausgangssignal der CPU. Dieses Befehlslesesignal wird benötigt, weil ähnlich wie beim Generieren des SAVE-Signales eine Programmadresse und damit auch die Betriebssystem-Startadresse BSA durch jedes beliebige Signal gebildet werden kann. Das Befehlslesesignal zeigt an, daß die am Adressbus anliegende Adresse nicht nur gelesen wird, sondern daß sie gelesen wird, um einen Befehl daraus zu bilden. Das Rücksetzsignal für die Kippstufe kann damit nicht zufällig gebildet werden, sondern ist in seiner Entstehung abhängig vom Programmablauf innerhalb der CPU und speziell von der Ausgabe des Befehlslesesignals im Sinne eines Kommandos zum Zurückstellen der Kippstufe. Die Betriebsadresse aufrufen und gleichzeitig das Befehlslesesignal erzeugen kann nur die CPU; beide Signale zusammen sind ein Beleg für das Laufen des Betriebssystems.

Mit dem Zurückstellen der Kippstufe K1 und dem dadurch bewirkten Abschalten des SAVE-Signals hat sich das zur Ausführung kommende Programm mit Sicherheitsverantwortung durchgesetzt und die CPU hat die Möglichkeit, Daten in allen Baugruppen zu verändern und Kommandos auch an sicherheitsempfindliche Einrichtungen auszugeben.

Fig. 3 zeigt den Aufbau der Torschaltungen, die den sicherheitsempfindlichen Einrichtungen zugeordnet sind und verhindern sollen, daß nicht sicherungstechnische Programme auf die Einrichtungen zugreifen können und dort Daten verändern oder über diese Einrichtungen Steuerbefehle ausgeben können. Jeder Torschaltung TOR ist ein Adreßkomparator AK3 zugeordnet, der die am Adreßbus liegende Adresse ADR mit einer ihm eingeprägten Baugruppenadresse BGA vergleicht und beim Feststellen von Übereinstimmung Steuerpotential auf den einen Eingang eines nachgeschalteten UND-Gliedes U3 legt. Dem zweiten Eingang dieses UND-Gliedes werden Steuersignale SS der CPU zugeführt als Zeichen dafür, daß die am Adreßbus liegende Adresse ADR auch tatsächlich von der CPU her generiert wurde und nicht etwa durch eine beliebige Software entstanden ist. An dem dritten Eingang des UND-Gliedes liegt über ein Negationsglied N1 das von der Baugruppe BESU bedarfsweise generierbare SAVE-Signal. Nur solange dieses SAVE-Signal nicht anliegt, also ein Programm mit sicherungstechnischem Charakter abläuft, ist das UND-Glied U3 durchgeschaltet und stellt an seinem Ausgang ein Baugruppen-Auswahlsignal BGS zur Verfügung, über das die nachgeschaltete sicherheitsempfindliche Einrichtung freigegeben wird zum Beschreiben mit am Datenbus anliegenden Daten. Außerdem wird das Ausgangssignal des UND-Gliedes U3 als Auswahlsignal AWS über eine zugehörige Auswahlleitung AWL der Auswahlsignal-Überwachung AWU zur Betriebszustandsüberwachung der betreffenden Torschaltung zugeführt. Das Baugruppenauswahlsignal BGS führt zum Setzen eines nicht dargestellten Registerldas eingangsseitig an den Datenbus angeschlossen ist und ausgangsseitig mit den zu steuernden Prozeßelementen verbunden ist. Das Baugruppenauswahlsignal gibt das Register frei zum Beschreiben mit am Datenbus liegenden Daten. Wenn der Prozessor im Programm an die Stelle kommt, in der es heißt, daß in das Register ein bestimmtes Muster eingeschrieben werden soll, dann gibt der Prozessor die Baugruppenadresse BGA der zugehörigen TOR-Schaltung aus und anschließend, nachdem die Adresse stabil geworden ist, die in das Register aufzunehmenden Daten. Ob sich das jeweils anliegende Datum tatsächlich durchsetzen kann, ist abhängig gemacht vom Nichtvorhandensein des SAVE-Signals, denn solange die Tore gesperrt sind, ist ein Zugriff auf die durch die Tore geschützten sicherheitsempfindlichen Elemente nicht möglich.

Wenn das Betriebssystem ein sicherheitsempfindliches Programm abarbeitet, beispielsweise die Anschaltung der Fahrtsignale, so sind die Torschaltungen offen, denn der Prozeß Fahrtlichtanschaltung ist sicherheitsrelevant. Der Prozessor stellt fest, wo überall Fahrtlicht anzuschalten ist. Er schreibt die Adressen der Torschaltungen, über die die Ansteuerung der Fahrtsignale erfolgen soll, und gibt dann das Datum für die Ansteuerung der an die ausgewählten Torschaltungen angeschlossenen Register aus. Auf das folgende Schreibsignal gehen die entsprechenden Steuerbefehle an die Lampenschalter der Signale ab. Nach Be endigung des Prozesses Fahrtlichtanschaltung ermittelt das Betriebssystem die folgende Prozeßsteuerung, in der abhängig davon, ob es sich um einen nicht sicherheitsrelevanten oder einen sicherheitsrelevanten Prozeß handelt, die Tore verschlossen werden oder offen bleiben. Die CPU ruft dann die zu behandelnden sicherheitsempfindlichen oder nicht sicherheitsempfindlichen Einrichtungen über ihre zugehörigen Adressen auf, bewertet die Daten und verändert sie ggf. nach Maßgabe des jeweils ablaufenden Prozesses.

Über die auf den Auswahlleitungen AWL der Torschaltungen liegenden Auswahlsignale ist die Auswahlsignal-Überwachung AWU jederzeit über den Betriebszustand der einzelnen Torschaltungen informiert. Entsprechende Meldungen werden von der Auswahlsignal-Überwachung über das Bussystem an die CPU übermittelt, und zwar auch dann, wenn die Auswahlsignal-Überwachung selbst über ihre Torschaltung gegen verändernden Zugriff geschützt ist. Zur Funktionskontrolle der Torschaltungen veranlaßt die CPU die Baugruppe BESU durch Aufschalten des SAVE-Signals, die Torschaltungen vorübergehend zu sperren. Anschließend versucht sie, durch Adressierung der einzelnen Torschaltungen den Datenbestand der durch diese geschützten Einrichtungen zu verändern. Dies ist nur möglich, wenn die Torschaltungen aufgrund eines Fehlers nicht sperren würden. Die am Ausgang der UND-Glieder der Torschaltung abgreifbaren Auswahlsignale AWS unterrichten die Auswahlsignal-Überwachung AWU davon, ob sich die Torschaltungen sperren lassen oder nicht. Um zu prüfen, ob sich die Torschaltungen auch öffnen lassen, veranlaßt die CPU bei nicht vorhandenem SAVE-Signal, daß die sicherheitsempfindlichen Einrichtungen eingangsseitig mit den an ihrem Ausgang abgreifbaren Daten beschrieben werden. Durch diese Maßnahme ändert sich am Datenbestand dieser Einrichtungen nichts; aus dem am Ausgang der UND-Glieder abgreifbaren Auswahlsignalen läßt sich jedoch erkennen, ob die Torschaltungen durchlässig geschaltet werden können oder nicht. Durch das Überprüfen des Funktionsverhaltens der Torschaltungen wird neben den Torschaltungen auch das Funktionsverhalten der Baugruppe BESU überprüft, denn beim Ausbleiben des SAVE-Signales während der ersten Phase des Prüfbetriebes würden in dem durch die Störung betroffenen Rechnerkanal Daten verändert werden, während dies in dem anderen Kanal nicht der Fall wäre; die Vergleicher würden dies erkennen und das Rechnersystem sicher abschalten. Wenn während der zweiten Phase des Prüfbetriebes das SAVE-Signal nicht abschaltbar wäre, so würde dies über die Auswahlsignal-Überwachung und die Vergleicher ebenfalls zum Abschalten des Rechnersystems führen. Das von der CPU für die Funktionsprüfung der Torschaltungen vorzugebende Prüfprogramm ist einer Richtigkeitskontrolle zu unterziehen, um sicherzustellen, daß es auf jeden Fall und rechtzeitig zur Anwendung kommt.

Fig. 4 zeigt den Aufbau des Zeitschalters TIM im Zusammenwirken mit der diesem vorgeschalteten Torschaltung. Der Zeitschalter, über den die zwangsweise Rückkehr aus einem nicht sicherungstechnischen Programm in das Betriebssystem herbeigeführt werden soll, wird aktiviert beim Start eines Programmes ohne Sicherheitsverantwortung. Bei einem derartigen Programm hat die Betriebssystem-Start-Überwachung BESU das SAVE-Signal angelegt, d. h. über den Ausgang eines Negationsgliedes N2 wird das UND-Glied U4 gesperrt, unabhängig davon, ob das nicht sicherheitsrelevante Programm über den Adreßkomparator AK4 und ein Steuersignal SS auf das UND-Glied U4 zugreifen will oder nicht. Mit dem Ausbilden des Signals AWS am Ausgang des UND-Glied es U4 verschwindet auch das Potential am Rücksetzeingang eines Zählers Z, dessen Eingang an einen quarzgesteuerten Oszillator OSZ angeschlossen ist. Der Zähler Z zählt nun aus einer definierten Ausgangsstellung heraus die vom Oszillator abgegebenen Impulse entweder ein oder aus. Die jeweilige Zählrate wird dem Zähler als Datum DB über den Datenbus mitgeteilt; sie kann abhängig von dem jeweils ablaufenden Programm unterschiedlich groß gewählt sein. Hat der Zähler eine durch die Taktfrequenz des Oszillators und die vorgegebene Behandlungsdauer des nicht sicherheitsrelevanten Programmes gegebene Zählstellung erreicht, so gibt er über seinen Ausgang einen nicht maskierbaren Interrupt NMI an die CPU, die daraufhin das jeweils laufende Programm unterbricht und das Betriebssystem aufruft. Das Betriebssystem unter-sucht nun, welches Folgeprogramm die höchste Priorität aufweist und veranlaßt dann die Abarbeitung dieses Programmes. Durch die Ausgabe des nicht maskierbaren Inter ruptes wird erreicht, daß nicht sicherheitstechnische Programme, die so wirken könnten, daß sie an den Prozeß gar nicht wieder abgeben wollten, z.B. weil sie in einer Schleife laufen, zwangsweise abgebrochen werden. Der Prozeß, der über das nicht sicherheitstechnische Programm gerade in der CPU abläuft, kann nicht verhindern, daß sich der nicht maskierbare Interrupt durchsetzt und die Prozeßverarbeitung unter einer ganz bestimmten Adresse neu zu laufen beginnt. Damit wird der Prozessor zwangsweise aus dem Prozeß herausgelöst. Der Zeitschalter selbst ist ebenfalls mit einer Torschaltung zu versehen, um zu verhindern, daß das nicht sicherungstechnische Programm so auf den Zeitschalter wirken kann, daß dieser nicht mehr abläuft. Es ist auch möglich, den Zeitschalter nicht oder nicht nur bei jedem nicht sicherheitsrelevanten Programm zu starten, sondern in regelmäßigen Abständen die zwangsweise Rückkehr in das Betriebssystem zu veranlassen.

Der Zeitschalter läßt sich im Rahmen eines Prüfbetriebes auf ordnungsgerechtes Funktionsverhalten prüfen, indem er per Adresse angesteuert und eingestellt wird und solange eingestellt bleibt bis er abgelaufen ist. Die CPU prüft dann, ob der nicht maskierbare Interrupt durchkommt oder nicht. Es läßt sich sogar nicht nur prüfen, ob der Zeitschalter irgendwann den Interrupt auslöst, sondern es läßt sich auch die eingestellte Zeitspanne direkt durch Auszählen des CPU-Taktes bestimmen. Das Prüfen der Zeitschalter über die Baugruppe BESU muß wie das Prüfen der Torschaltungen von einem eigens dazu vorgesehenen geprüften Programm vorgenommen werden, weil zum sicheren Aufdecken von Fehlfunktionen in einem Rechnerkanal eine Funktionsprüfung aller an der Sicherung sicherheitsempfindlicher Einrichtungen beteiligten Elemente innerhalb der Ausfall-Offenbarungszeit für Einzelfehler vorgenommen werden muß.

Mit dem Einfügen der zum Durchführen der erfindungsgemäßen Lehre erforderlichen zusätzlichen Elemente Auswahlsignalüberwachung AWU, Zeitschalter TIM und Torschaltungen TOR muß damit gerechnet werden, daß diese Einrichtungen selbst durch irgendwelche Ausfälle die Verarbeitung verändern oder ihre Wirkung verlieren. In einem failsafe-System muß daher der Sicherheitsnachweis darüber erbracht werden, daß diese zusätzlichen Einrichtungen nicht gerade so ausfallen daß der Ausfall überhaupt nicht mehr bemerkt wird, weil die vorgesehene Wirkung nicht mehr eintritt. Dies gilt umso mehr, als im vorliegenden Fall davon ausgegangen wird, daß nicht sicherungstechnische Programme laufen, die gefährliche Wirkungen herbeiführen können. Dieser Ausschluß wird durch die mehrkanalige Struktur des Rechnersystems gewährleistet. Wenn z.B. die einer Ausgabeeinheit zugeordnete Torschaltung ausfallen würde, könnte zwar über ein nicht sicherungstechnisches Programm, das auf diese Ausgabeeinheit zugreifen wollte, eine diesbezügliche einkanalige Ansteuerung der Ausgabeeinheit bewirkt werden. Da aber davon ausgegangen werden kann, daß im anderen Kanal zur gleichen Zeit nicht der gleiche Fehler ebenfalls auftritt, bliebe die Anschaltung der Ausgabeeinheit unwirksam. Die Vergleicher würden unterschiedliche Daten in beiden Rechnerkanälen erkennen und die Rechner abschalten.

Es ist vorstellbar, daß über längere Zeit keine Programme ohne Sicherheitsverantwortung laufen; etwaige Defekte in den Torschaltungen oder in den diesen nachgeschalteten Einrichtungen sind dann nicht unmittelbar nach dem eingetretenen Defekt erkennbar, sondern erst bei Beanspruchung im Rahmen eines nicht sicherheitsrelevanten Programmes. Der durch den Ausfall bedingte Fehler muß jedoch unverzüglich erkannt werden, weil mit zunehmender Dauer die Wahrscheinlichkeit steigt, daß in dem anderen Kanal ein gleichwirkender Fehler, z.B. der Ausfall der Sperrwirkung einer Torschaltung, auftreten kann, der die sichere Fehlererkennung durch Vergleich unmöglich machen würde. Die maximal zulässige Zeitspanne für das Registrieren des ersten eingetretenen Fehlers ist die zulässige Ausfall-Offenbarungszeit für Einzelfehler, die sich nach bestimmten Gesetzmäßigkeiten für jede Einrichtung berechnen läßt. Innerhalb dieser Zeit nach dem Auftreten eines Fehlers muß der Fehler erkannt worden sein und eine entsprechend gerichtete Wirkung vom Rechnersystem eingeleitet werden; diese Wirkung besteht allein im Abschalten des Rechners. Zum Erkennen eines ersten Fehlers im Funktionsverhalten der Torschaltungen dient die Auswahlsignal-Überwachung AWU, der die Auswahlsignale AWS der Tore zugeführt sind. Durch die Prüfung der Funktionsfähigkeit der Torschaltungen im Rahmen eines Prüfbetriebes, in dem jede Torschaltung gesondert ansteuerbar ist, lassen sich alle für die Durchführung des erfindungsgemäßen Verfahrens verwendeten Elemente auf ordnungsgerechtes Betriebsverhalten überprüfen. Damit ist unter der Vorraussetzung, daß dar Prüfprogramm selbst einem Sicherheitsnachweis unterzogen ist, die Fehlerfreiheit der zum Durchführen des erfindungsgemäßen Verfahrens verwendeten Einrichtungen nachgewiesen. Über diese Einrichtungen haben nicht sicherheitsrelevante Programme keinen Zugriff auf sicherheitsempfindliche Einrichtungen. Damit brauchen derartige Programme keinem gesonderten Sicherheitsnachweis unterzogen werden, denn von ihnen kann keinerlei Gefährdung ausgehen. Das erfindungsgemäße Verfahren ist nicht nur zur Anwendung bei einem 2 von 2-Rechnersystem geeignet, sondern läßt sich mit Vorteil auch bei allen anderen sicheren Rechnersystemen, insbesondere bei 2 von 3-Rechnersystemen, mit Vorteil anwenden; dort sind entsprechend mehr Vergleicher zur laufenden Gleichheitskontrolle der auf den internen Rechnerbussen anliegenden Daten vorzusehen.

**Ansprüche**

1. Verfahren zum Betrieb eines mehrkanaligen failsafe-Rechnersystems, in dem sowohl Programme mit als auch Programme ohne Sicherheitsverantwortung laufen, und bei dem zum Aufdecken von Rechnerfehlfunktionen auf den einzelnen Rechnerbussen des Rechnersystems liegende Daten auf Übereinstimmung geprüft werden und im Fall von Abweichungen im Sinne einer Minimierung der Gefährdung steuernd auf den Prozeß eingewirkt wird, insbesondere zum Betrieb von Mehrrechnersystemen in der Eisenbahnsignaltechnik, **dadurch gekennzeichnet,**
daß beim Behandeln von Programmen ohne Sicherheitsverantwortung alle sicherheitsempfindlichen Einrichtungen (IOSA, SPSA, TIM, AWU) des failsafe-Rechnersystems (MC1, MC2) kanalweise gegen verändernde Zugriffe geschützt werden.

2. Verfahren nach Anspruch 1, **dadurch gekennzeichnet,** daß der Schutz gegen verändernde Zugriffe spätestens nach Ablauf einer vorgegebenen Zeitspanne seit Start eines Programmes ohne Sicherheitverantwortung wieder zurückgenommen wird.

3. Einrichtung zur Durchführung des Verfahrens nach Anspruch 1 und 2, **dadurch gekennzeichnet,** daß das Betriebssystem jedes Einzelrechners (MC1, MC2) bei Übergabe der Steuerung an ein Programm ohne Sicherheitsverantwortung in einer gesonderten Hardware (BESU) ein Signal (SAVE) erzeugt, mit dem es den sicherheitsempfindlichen Einrichtungen ( IOSA, SPSA, TIM, AWU) zugeordnete Torschaltungen (TOR), über die diese Einrichtungen beim Erkennen der zugehörigen Baugruppenadresse (BGA) zur Datenbehandlung ausgewählt werden können für die Laufdauer dieses Programmes oder eines Teiles davon zur verändernden Zugriffsblockierung hochohmig schaltet.

4. Einrichtung nach Anspruch 3, **dadurch gekennzeichnet,** daß zum Speichern und Ausgeben von sicherheitsempfindlichen und nicht sicherheitsempfindlichen Daten gesonderte Speicher (SPSA, SPAA) und Ausgabebaugruppen (IOSA,

5. Einrichtung nach Anspruch 3, **dadurch gekennzeichnet,** daß ein ebenfalls mit einer vorgeschalteten Torschaltung versehener Zeitschalter (TIM) vorgesehen ist, der über seine Torschaltung bei Ausgabe eines SAVE-Signales einstellbar und bei Rücknahme des SAVE-Signals rückstellbar ist und der bei Ablauf der vorgegebenen Zeitspanne seit Start eines Programms ohne Sicherheitsverantwortung oder in einem festen zeitlichen Raster einen nicht maskierbaren Interrupt (NMI) an die CPU des zugehörigen Einzelrechners zum Zurücknehmen des SAVE- Signals ausgibt.

6. Einrichtung nach den Ansprüchen 4 und 5, **dadurch gekennzeichnet,** daß von den einzelnen Torschaltungen (TOR) Auswahlleitungen (AWL) auf eine jedem Einzelrechner (MC1, MC2) zugeordnete Auswahlsignalüberwachung (AWU) zum Überwachen der Betriebszustände der einzelnen Torschaltungen geführt sind.

7. Einrichtung nach Anspruch 3, **dadurch gekennzeichnet,** daß jedem Einzelrechner (MC1; MC2) zum Erzeugen und zum Zurücknehmen des SAVE-Signals eine an den zugehörigen internen Bus angeschlossene Überwachungsschaltung (BESU) zugeordnet ist, die beim Erkennen einer ihr zugewiesenen Adresse (BSA) und dem Vorhandensein eines Steuersignals (SS) der zugehörigen CPU eine Kippstufe (K1) zum Aufschalten des SAVE-Signals auf die Torschaltungen (TOR) der zugehörigen sicherheitsempfindlichen Einrichtungen (IOSA, SPSA, TIM, AWU) einstellt und die bei einem Erkennen der Betriebssystem-Startadresse (SAA) oder eines Betriebssystem-Startadreßbereiches und dem Vorhandensein eines Steuersignals (SS) der zugehörigen CPU die Kippstufe (K1) zurückstellt.

8. Einrichtung nach den Ansprüchen 3 bis 7, **dadurch gekennzeichnet,** daß die Torschaltung (TOR) aus einem UND- Glied (U3, U4) mit drei Eingängen besteht, dessen erster beim Erkennen seiner Baugruppenadresse (BGA) und dessen zweiter beim Vorhandensein eines Steuersignals (SS) der zugehörigen CPU Steuerpotential führt und daß dem dritten Eingang des UND-Gliedes ein Negationsglied (N1, N2) vorgeschaltet ist, dessen Eingang mit dem das SAVE-Signal führenden Ausgang der Überwachungsschaltung (BESU) verbunden ist.

9. Einrichtung nach den Ansprüchen 6 und 8, **dadurch gekennzeichnet,** daß der Ausgang des UND-Gliedes (U3, U4) über eine Auswahlleitung (AWL) mit einem Eingang der Auswahlsignalüberwachung (AWU) verbunden ist.

10. Einrichtung nach den Ansprüchen 3, 7 und 8, **dadurch gekennzeichnet,** daß zum Erkennen vorgegebener Adressen (BSA, BGA) oder Adreßbereiche ein Adreßkomparator (AK1 bis AK4) vorgesehen ist, dessen einem Eingang die Adresse (ADR) am jeweils zugehörigen Adreßbus und dessen anderem Eingang die zu erkennende Betriebs- oder Baugruppenadresse (BSA, BGA) zugeführt ist.

11. Einrichtung nach den Ansprüchen 5 und 8, **dadurch gekennzeichnet,** daß der Ausgang des dem Zeitschalter (TIM) zugeordneten UND-Gliedes (U4) auf den Rücksetzeingang eines eingangsseitig an einen Oszillator (OSZ) angeschlossenen Zählers (Z) geführt ist, der über den zugehörigen Datenbus auf einen Zählerstand einstellbar ist, der der Summe der während der vorgegebenen Zeitspanne vom Oszillator abgegebenen Taktimpulse entspricht und der an seinem Ausgang beim Erreichen dieses Zählerstandes den nicht maskierbaren Interrupt (NMI) für die CPU des zugehörigen Einzelrechners bereitstellt.

12. Einrichtung nach den Ansprüchen 3 bis 9, **dadurch gekennzeichnet,** daß die Tore zu Prüfzwecken jeweils einzeln oder gemeinsam, aber in allen Rechnerkanälen gleichzeitig, vorübergehend in den hochohmigen Schaltzustand steuerbar sind, daß die CPU des jeweils zugehörigen Rechners in dieser Zeit den Versuch eines verändernden Zugriffs auf die durch diese Tore geschützten sicherheitsempfindlichen Einrichtungen (IOSA, SPSA, TIM, AWU) unternimmt und daß die Auswahlsignalüberwachungen (AWU) die über ihre Auswahlleitungen (AWL) anliegenden Statusmeldungen der Tore der CPU des jeweils zugehörigen Einzelrechners zur Bewertung zuführen.

13. Einrichtung nach den Ansprüchen 3 bis 9, **dadurch gekennzeichnet,** daß die CPU's der Einzelrechner des Rechnersystems jeweils gleichzeitig die am Ausgang der sicherheitsempfindlichen Einrichtungen (IOSA, SPSA, TIM, AWU) anstehenden Daten für jede Einrichtung gesondert oder gemeinsam zu Prüfzwecken bei fehlendem SAVE-Signal auf den Eingang dieser Einrichtungen zurückführen und daß die Auswahlsignalüberwachungen (AWU) die über ihre Auswahlleitungen (AWL) anliegenden Statusmeldungen der Tore der CPU des jeweils zugehörigen Einzelrechners zur Bewertung zuführen.

14. Einrichtung nach den Ansprüchen 3 bis 7 sowie 12 und 13, **dadurch gekennzeichnet,** daß die Tore in integrierter Technik ausgeführt sind.

15. Einrichtung nach Anspruch 11, **dadurch gekennzeichnet,** daß die Zeitschalter (TIM) zu Prüfzwecken in allen Rechnerkanälen gleichzeitig für Zeitspannen einstellbar sind, die mindestens gleich der vorgegebenen Zeitspanne sind und daß die CPU des zugehörigen Einzelrechners das Auftreten des nicht maskierbaren Interrupts (NMI) und gegebenenfalls durch Auszählen des Rechnertaktes das zeitgerechte Auftreten des nicht maskierbaren Interrupts überwacht.

16. Einrichtung nach den Ansprüchen 12 und 13 und/oder 15, **dadurch gekennzeichnet,** daß die Funktionsprüfung der Tore und/oder der Zeitschalter in einem vorgesehenen zeitlichen Raster erfolgt, das durch die zulässige Einzelfehleroffenbarungszeit der Tore bzw. der Zeitschalter begrenzt ist.

# FIG 1

# FIG 2

# FIG 3

# FIG 4